# EUROPÄISCHE PATENTSCHRIFT

(11) **EP 1 741 576 B1**
(45) Veröffentlichungstag und Bekanntmachung des Hinweises auf die Patenterteilung: **06.05.2009**
(21) Anmeldenummer: 06010359.5
(22) Anmeldetag: 19.05.2006
(51) Int. Cl.: B60G 3/20, B60G 7/00

(54) **Radaufhängung für die gelenkten Räder eines Kraftfahrzeuges**
Wheel suspension for the steering wheel of a vehicle
Suspension pour roue directrice de véhicule

(30) Priorität: 04.07.2005 DE 102005031179
(43) Veröffentlichungstag der Anmeldung: 10.01.2007
(73) Patentinhaber: AUDI AG, 85045 Ingolstadt (DE)
(72) Erfinder: Züge, Frank, 85110 Schelldorf (DE); Lux, Ulrich, 85591 Vaterstetten (DE); Bschierl, Christian, 85095 Denkendorf (DE); Hammer, Bernhard, 91790 Nennslingen (DE); Steigerwald, Alexander, 91177 Thalmässing (DE)

(56) Entgegenhaltungen:
- EP-A- 0 289 889
- DE-A1- 3 339 523
- DE-C3- 1 938 850
- US-A- 2 732 233
- US-A- 4 226 440
- US-A- 5 951 030
- PATENT ABSTRACTS OF JAPAN Bd. 2000, Nr. 20, 10. Juli 2001 (2001-07-10) & JP 2001 071730 A (MATSUMOTO JIDOSHA:KK), 21. März 2001 (2001-03-21)

## Beschreibung

Die Erfindung betrifft eine Radaufhängung für die gelenkten Räder eines Kraftfahrzeuges gemäß dem Oberbegriff des Patentanspruches 1.

Eine derartige Radaufhängung zeigt beispielsweise die DE 19 38 850 C3, bei der die oberen und/oder die unteren Lenker der Radführung Einzellenker sind, die in Verbindung mit der Spurstange der Lenkung des Kraftfahrzeuges eine spurstabile Radführung bilden. Der Vorteil einer derartigen Radaufhängung mit aufgelösten Lenkern liegt insbesondere in der Bildung einer virtuellen Lenkachse, die weitgehendst unabhängig von baulichen Zwängen so gelegt werden kann, dass günstige Achswerte wie Radsturz, Nachlauf, Lenkrollradius, Störkrafthebelarm bei angetriebenen Rädern (Maß a), etc. einstellbar sind.

Die gattungsbildende EP 0 289 889 A1 zeigt bereits eine Radaufhängung für gelenkte Räder von Kraftfahrzeugen, mit einem schwenkbaren Radträger, der als untere Führungselemente zwei konvergierend zum Radträger verlaufende Lenker aufweist, wobei die Tragfeder des Kraftfahrzeuges an einem der Lenker derart abgestützt ist, dass an diesem eine eine Lenkungsrückstellung bewirkende Querkraftkomponente auftritt. Die Lenkergeometrie ist dabei derart ausgelegt, dass diese Querkraftkomponente multipliziert mit dem Hebelarm zwischen Anlenkpunkt des Lenkers am Radträger und der durch die Verlängerung der Lenker gebildeten ideellen Lenkachse bei einem kurveninneren Lenkeinschlag einen geringeren Wert als bei einem kurvenäußeren Lenkeinschlag einnimmt.

Die US 4, 226, 440 betrifft eine Radaufhängung mit einem oberen und einem unteren Lenker, wobei der untere Lenker über eine Einstelleinrichtung höhenverstellbar am Radträger gehaltert ist, so dass ein Fahrzeugfrontend bei einer entsprechenden Betätigung der Einstelleinrichtung abgesenkt bzw. abgehoben werden kann. Durch diese Absenkmöglichkeit des Fahrzeugfrontendes soll insbesondere die optische Erscheinung eines Fahrzeugs sportlicher gemacht werden.

Demgegenüber ist es Aufgabe der vorliegenden Erfindung, eine Radaufhängung für die gelenkten Räder eines Kraftfahrzeuges zu schaffen, mittels der auf einfache Weise eine Anpassung an unterschiedliche Fahrzeugtypen und/oder eine Korrektur von fahrdynamischen Parametern der Radaufhängung ermöglicht wird.

Diese Aufgabe wird gelöst mit den Merkmalen des Patentanspruches 1. Vorteilhafte Weiterbildungen sind Gegenstand der Unteransprüche.

Gemäß Anspruch 1 ist zumindest der untere, vordere und etwa quer zur Fahrzeuglängsmittelachse verlaufende Lenker der Radaufhängung an zumindest einer seiner Anlenkstellen am Radträger und am Aufbau des Kraftfahrzeuges höhenverstellbar angeordnet. Durch die damit verbundene Neigungsverstellung des Lenkers kann das Momentanzentrum (= kinematische Wankabstützung) der Radaufhängung gezielt verändert und z. B. an verschiedene Fahrzeugtypen unter Beibehaltung an sich gleicher Radaufhängungsteile angepasst werden. Auch Korrekturen der Einstellungswerte nach Reparaturarbeiten oder nach dem Austausch von Radaufhängungsteilen sind einfach durchführbar.

Erfindungsgemäß ist weiter zudem vorgesehen, dass die am Radträger über ein Kugelgelenk angelenkte Spurstange des Lenkgetriebes im Wesentlichen parallel und in der gleichen Lenkerebene der aufgelösten, unteren Lenker der Radaufhängung verläuft, wobei das Kugelgelenk ebenfalls höhenverstellbar am Radträger angelenkt ist. Damit ist eine vorteilhafte Anpassung oder Korrektur von Einstellungswerten der Radaufhängung gegeben. Bei einer Radaufhängung mit aufgelösten, unteren Lenkern und einer in dieser Lenkerebene angeordneten, parallel zum Lenker verlaufenden Spurstange als weiterer Lenker ermöglicht die Spurstange mit der besagten Höhenverstellung bzw. der damit bewirkten Neigungsverstellung eine Beeinflussung der Spurkonstante (Spurwinkeländerung bei Wanken und Nicken des Kraftfahrzeuges) und damit verbunden eine Beeinflussung des Fahrverhaltens.

In einer bevorzugten Ausführung der Erfindung kann der zumindest eine Lenker über ein Kugelgelenk an dem Radträger angelenkt sein und es kann das Kugelgelenk relativ zum Radträger oder zum Lenker höhenverstellbar sein.

Konstruktiv besonders robust kann ferner das Gehäuse des Kugelgelenkes im Radträger oder im Lenker positioniert und höhenverstellbar ausgebildet sein. Dies ermöglicht eine Höhenverstellung bzw. eine Neigungsverstellung des Lenkers ohne jegliche Beeinträchtigung der Funktions- und Belastungskriterien am Kugelgelenk.

Dabei kann alternativ das Gelenkgehäuse in eine Gewindebohrung des Radträgers oder Lenkers eingeschraubt sein, wobei die Einschraubtiefe durch Distanzscheiben oder eine Kontermutter definiert ist; oder es kann das Gelenkgehäuse in eine Bohrung des Radträgers oder Lenkers eingesteckt und mittels einer Klemmschraube gehalten sein, wobei ebenfalls die Einstecktiefe durch Distanzscheiben definiert ist; schließlich kann das Gelenkgehäuse in eine abgestufte Gewindebohrung des Radträgers oder Lenkers in einen Gewindeabschnitt kleineren Durchmessers eingeschraubt sein, während eine in den weiteren Gewindeabschnitt größeren Durchmessers eingeschraubte Stellmutter die Einschraubtiefe des Gehäuses definiert.
Der untere, vordere Lenker kann in an sich bekannter Weise durch Anlenkung einer Feder-Dämpfer-Einheit (z.B. ein Federbein) als Traglenker ausgeführt sein.

Bevorzugt und baulich einfach kann dabei der Gelenkzapfen des in die Spurstange integrierten Kugelgelenkes relativ zum Lenkarm am Radträger höhenverstellbar mit dem Lenkarm verbunden sein.

Mehrere Ausführungsbeispiele der Erfindung sind im folgenden mit weiteren Einzelheiten näher erläutert. Die schematische Zeichnung zeigt in:
- **Fig. 1**: in einer raumbildlichen Ansicht schräg von vorne eine linke Radaufhängung für gelenkte und angetriebene Räder eines Kraftfahrzeuges, mit oberen und unteren Lenkern, einem Radträger, einem Federbein, einer Lenkung und einem Stabilisator;
- **Fig. 2**: eine Ansicht von vorne auf die Radaufhängung gemäß Fig. 1, mit Radträger, unterem vorderen Lenker und der Spurstange, sowie mit Höheneinstellung des Lenkers und der Spurstange relativ zum Radträger;
- **Fig. 3**: einen Schnitt gemäß Linie III ― III der Fig. 2 durch das höhenverstellbare Kugelgelenk zwischen dem unteren Lenker und dem Radträger nach den Fig. 1 und 2 mit einer Schraubverbindung zur Höheneinstellung;
- **Fig. 4**: eine alternative Ausbildung der Höhenverstellung des Kugelgelenkes zwischen dem unteren Lenker und dem Radträger in der Schnittebene der Fig. 3, mit einer Steckverbindung; und
- **Fig. 5**: eine weitere alternative Ausbildung der Höhenverstellung des Kugel-gelenkes zwischen dem unteren Lenker und dem Radträger in der Schnittebene gemäß Fig. 3, mit einer Schraubverbindung und einer Stellmutter.

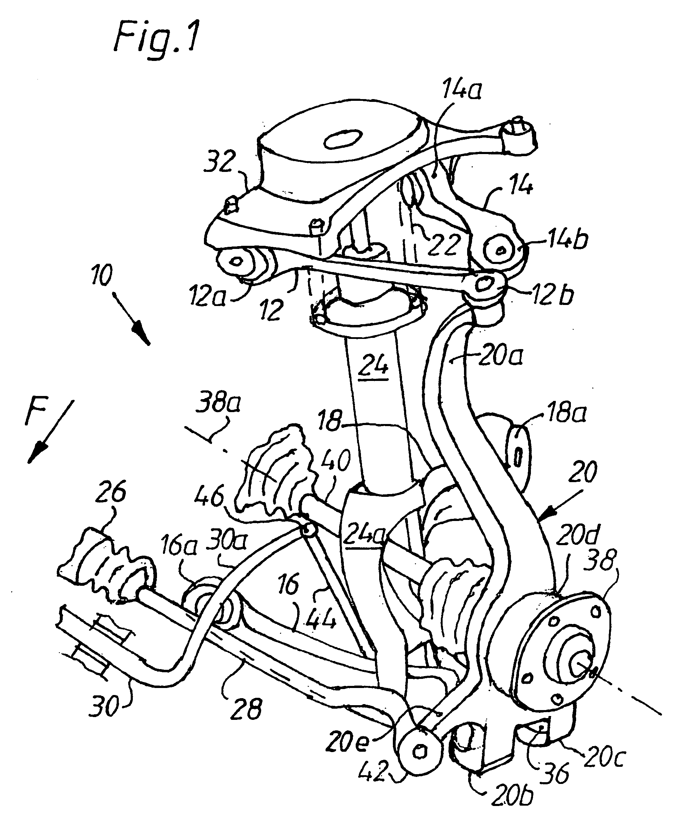

In der **Fig. 1** ist eine vordere, linke Radaufhängung 10 für Kraftfahrzeuge dargestellt, die sich im wesentlichen aus zwei oberen einzelnen Lenkern 12, 14, zwei unteren einzelnen Lenkern 16, 18, einem Radträger 20, einem aus einer Tragfeder 22 und einem Teleskopstoßdämpfer 24 gebildeten Federbein, einem Zahnstangenlenkgetriebe 26 mit Spurstangen 28 und einem U-förmigen Stabilisator 30 zusammensetzt.

Das Zahnstangenlenkgetriebe 26 ist bekannter Bauart und nur angedeutet dargestellt. Die rechte Radaufhängung 10 sowie der quer verlaufende Stabilisator 30 sind spiegelbildlich gleich ausgeführt.

Die oberen Lenker 12, 14 sind wie ersichtlich in einem definierten Winkel zueinander angeordnet und über innere Lagerstellen 12a, 14a an einer Lagerkonsole 32 angelenkt. An der Lagerkonsole 32 ist ferner das Federbein 22, 24 gelenkig abgestützt. Die Lagerkonsole 32 ist mittels mehrerer Schrauben (nicht dargestellt) mit dem Aufbau des Kraftfahrzeuges fest verbunden.

Die äußeren, als Kugelgelenke ausgebildeten Lagerstellen 12b, 14b der Lenker 12, 14 sind oberhalb des Rades (nicht dargestellt) des Kraftfahrzeuges an einem nach oben geführten Arm 20a des Radträgers 20 in einem definierten Koppelabstand angelenkt. Der Arm 20a ist dabei zur Bereitstellung eines ausreichenden Freiganges des Rades nach innen gekrümmt ausgeführt.

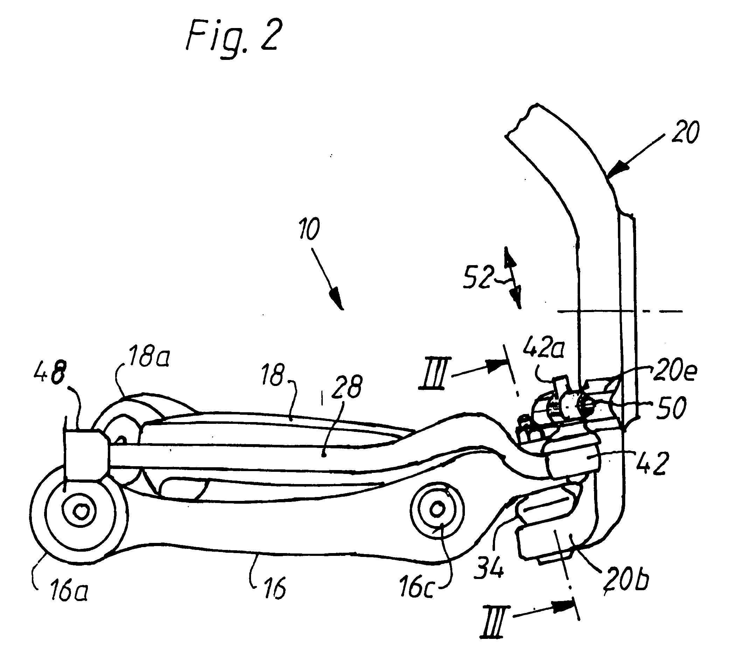

Die unteren Lenker 16, 18 sind einerseits über Lenkerlager 16a, 18a mit dem nicht dargestellten Aufbau des Kraftfahrzeuges gelenkig verbunden und andererseits an unteren Aufnahmen 20b, 20c des Radträgers 20 über Kugelgelenke 34, 36 (**Fig. 2**) angelenkt. Die Aufnahmen 20b, 20c liegen relativ nahe unterhalb der Raddrehachse 38a, die durch die nicht dargestellte Radlagerung innerhalb eines nabenförmigen Abschnittes 20d des Radträgers 20 und einem drehbar gelagerten Radflansch 38 definiert ist. Der Radflansch 38 ist mit einer Antriebswelle 40 zum Antrieb des Rades trieblich verbunden.

Der vordere, untere Lenker 16 bildet dabei den entsprechend verstärkt ausgelegten Traglenker der Radaufhängung 10, an dem ein gabelförmiger Abschnitt 24a des Teleskopstoßdämpfers 24 in relativer Nähe zu den Aufnahmen 20b, 20c des Radträgers 20 angelenkt ist. Der Abschnitt 24a umgreift dabei den Lenker 16 und ist unter Zwischenschaltung eines gummielastischen Lagers (16c, **Fig. 2**) mit einer den Lenker 16 und die Schenkel des gabelförmigen Abschnittes 24a durchdringenden Schraube mit dem Lenker 16 verbunden. Wie ersichtlich ist, ist auch die Antriebswelle 40 durch den Abschnitt 24a hindurchgeführt.

Der vordere, untere Lenker 16 ist im wesentlichen quer zur Längsrichtung des Kraftfahrzeuges ausgerichtet, während der hintere, untere Lenker 18 in einem Winkel von ca. 45 Grad zum vorderen Lenker 16 angeordnet ist. Durch die dargestellte, relativ starke Krümmung des Lenkers 18 nach innen ist der Freigang des Rades beim vollen Lenkeinschlag sichergestellt.

Das Zahnstangenlenkgetriebe 26 mit der abtreibenden Spurstange 28 ist in Fahrtrichtung F des Kraftfahrzeuges gesehen vor dem Lenker 16 im wesentlichen in der durch die unteren Lenker 16, 18 gebildeten Horizontalebene angeordnet, wobei die Spurstange 28 etwa parallel bzw. leicht gepfeilt zum Lenker 16 ausgerichtet ist. Die Spurstange 28 ist über ein Kugelgelenk 42 mit dem nach vorne ragenden Lenkarm 20e des Radträgers 20 und über ein weiteres Kugelgelenk 48 (**Fig. 2**) mit der Zahnstange des Lenkgetriebes 26 verbunden.

Noch räumlich vor dem Lenkgetriebe 26 ist der U-förmige Stabilisator 30 am Aufbau des Kraftfahrzeuges drehbar gelagert, dessen im wesentlichen in Längsrichtung verlaufender Schenkel 30a die Spurstange 28 und den Lenker 16 quert und über eine nach unten ragende Koppelstange 44 und über Kugelgelenke 46 mit dem gabelförmigen Abschnitt 24a des Stoßdämpfers 24 verbunden ist. Die Anlenkstelle der Koppelstange 44 am gabelförmigen Abschnitt 24a ist auf der Zeichnung nicht ersichtlich. Die Schenkel 30a des Stabilisators 30 sind derart nach oben und seitlich gekrümmt ausgeführt, dass der Freigang des Rades beim Lenkeinschlag und der Freigang der Spurstange 28 und des Lenkers 16 beim Durchfedern des Rades gewährleistet sind.

Wie insbesondere der **Fig. 2** entnehmbar ist, ist das mit dem Lenkarm 20e des Radträgers 20 verbundene Kugelgelenk 42 höhenverstellbar mit dem Lenkarm 20e verbunden.

Dazu ist ein zylindrischer Abschnitt des Gelenkzapfens 42a in eine an den Lenkarm 20e angeformte Klemmschelle eingesteckt und kann mittels der quer dazu verlaufenden Klemmschraube 50 festgeklemmt werden. Durch die größere Länge des Abschnittes des Gelenkzapfens 42a ist das Kugelgelenk 42 relativ zur Klemmschelle bzw. zum Lenkarm 20e bzw. zum Radträger 20 in einem definierten Ausmaß (Doppelpfeil 52) verschiebbar und kann in der eingestellten Höhe mittels der Klemmschraube 50 festgestellt werden.

Die besagte Höhenverstellung der Spurstange 28 bzw. deren Neigungsverstellung gegenüber einer Horizontalen kann auch gemäß dem Vorschlag der DE 33 39 523 C2 mittels einer mit dem Gelenkzapfen 42a zusammenwirkenden Stellmutter erfolgen.

Des weiteren ist das äußere Kugelgelenk 34 des vorderen, unteren Lenkers 16 höhenverstellbar etwa in Richtung des Doppelpfeiles 52 mit dem Radträger 20 verbunden, so dass auch die Neigung des Lenkers 16 gegenüber einer Horizontalen definiert verstellbar ist.

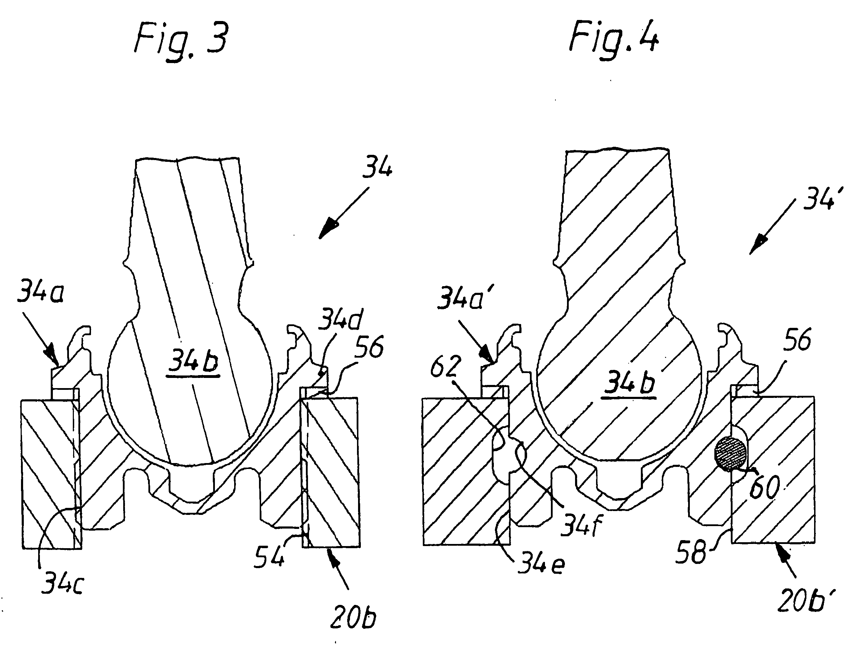

Die **Fig. 3** zeigt dazu die Aufnahme 20b des Radträgers 20, in deren ringförmigen Abschnitt eine durchgehende Gewindebohrung 54 ausgebildet ist. In die Gewindebohrung 54 ist das Gelenkgehäuse 34a des nur teilweise dargestellten Kugelgelenkes 34 mit einem entsprechenden Gewindeabschnitt 34c eingeschraubt. Der nur teilweise dargestellte Gelenkzapfen 34b ist in bekannter Weise im Gelenkgehäuse 34a dreh- und schwenkbar gelagert, sowie mit dem Lenker 16 fest verbunden.

Zwischen einer ringförmigen Anschlagschulter 34d des Gelenkgehäuses 34a und der korrespondierenden Stirnseite der Aufnahme 20b des Radträgers 20 ist eine Distanzscheibe 56 eingelegt, die die Einschraubtiefe des Gelenkgehäuses 34a des Kugelgelenkes 34 definiert.

Durch die Verwendung verschieden starker oder in ihrer Anzahl unterschiedlicher Distanzscheiben 56 kann somit die Höhe des Kugelgelenkes 34 relativ zum Radträger 20 beliebig eingestellt werden (unter Berücksichtigung der konstruktiv vorgesehenen Gewindelängen).

Anstelle der dargestellten Distanzscheibe 56 könnte auch eine Kontermutter vorgesehen sein, die auf den Gewindeabschnitt 34c des Gelenkgehäuses 34a aufgeschraubt ist und mittels der eine definierte Einschraubtiefe des Gewindeabschnittes 34b relativ zur Aufnahme 20b des Radträgers 20 einstellbar und festlegbar wäre.

In einer alternativen Ausführung (**Fig. 4**) der Höhenverstellung des Kugel-gelenkes 34' des Lenkers 16 relativ zum Radträger 20 ist in die ringförmige Aufnahme 20b' eine Bohrung 58 eingearbeitet, in die ein zylindrischer Abschnitt 34e des Gelenkgehäuses 34a' eingesteckt ist.

Die Aufnahme 20b' ist in an sich bekannter Weise als Klemmschelle ausgeführt, durch die sich quer hindurch eine Klemmschraube 60 erstreckt. Die Klemmschraube 60 greift einerseits in eine ringförmige Außennut 34f des Gelenkgehäuses 34a' und andererseits in eine im Querschnitt langlochförmige Innennut 62 der Aufnahme 20b' ein.

Dies ermöglicht ein Verschieben des Gelenkgehäuses 34a' des Kugelgelenkes 34' relativ zur Aufnahme 20b' bzw. zum Radträger 20 mit entsprechender Neigungsverstellung des Lenkers 16. Im gelösten Zustand kann dabei die Klemmschraube 60 innerhalb der langlochförmigen Innennut 62 verschoben werden. Mit dem Anziehen der Klemmschraube 60 ist das Gelenkgehäuse 34a' am Radträger 20 festgelegt. Die Einstecktiefe des Gelenkgehäuses 34a' bzw. die Höheneinstellung relativ zum Radträger 20 kann wiederum wie zur Fig. 3 beschrieben mittels Distanzscheiben 56 definiert sein.

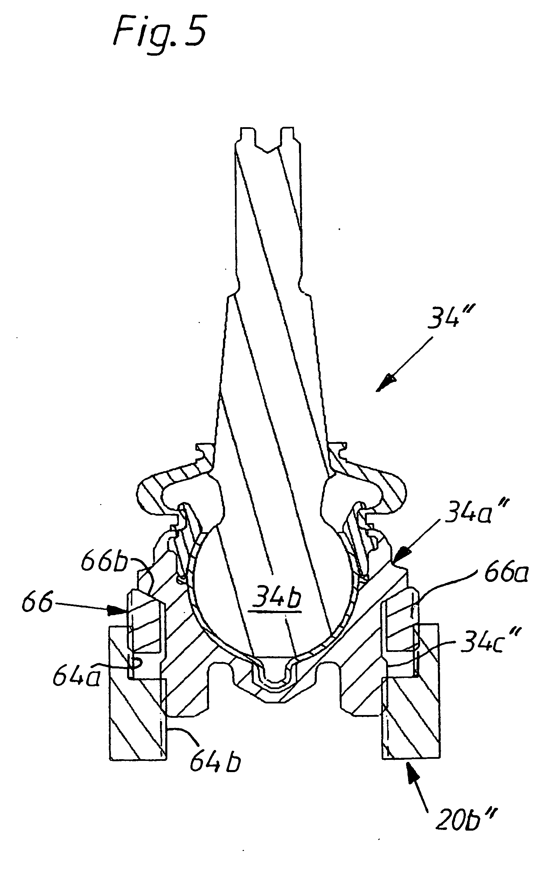

Die **Fig. 5** schließlich zeigt eine weitere, alternative Höheneinstellung des Lenkers 16 relativ zum Radträger 20, bei der in der Aufnahme 20b" des Radträgers 20 eine gestufte Gewindebohrung 64 mit einem Abschnitt 64a größeren Durchmessers und einem Abschnitt 64b kleineren Durchmessers eingebracht ist.

Das Gelenkgehäuse 34a" des Kugelgelenkes 34" ist wiederum mit einem Gewindeabschnitt 34c" versehen, der in den Gewindeabschnitt 64b der Aufnahme 20b" einschraubbar ist.

Zur Höheneinstellung des Gelenkgehäuses 34a" relativ zur Aufnahme 20b" ist eine Stellmutter 66 vorgesehen, die mit einem Außengewinde 66a in den Gewindeabschnitt 64a der Aufnahme 20b" eingeschraubt ist und deren konisch ausgeführte Stirnseite 66b mit der korrespondierend konisch ausgeführten, ringförmigen Anschlagschulter 34d" des Gelenkgehäuses 34a" zusammenwirkt.

Die Einschraubtiefe des Gelenkgehäuses 34a" bzw. eine Höheneinstellung des Kugelgelenkes 34" ergibt sich somit durch mehr oder minder tiefes Einschrauben der Stellmutter 66, wobei beim Festschrauben des Gelenkgehäuses 34a" die Stellmutter 66 gegengehalten werden muss.

Durch die beschriebene Höhenverstellung des Kugelgelenkes 42 bzw. die damit verbundene Neigungsverstellung der Spurstange 28 gegenüber einer Horizontalen kann eine definierte Spurkonstante der Räder der Radaufhängung 10 bei Wank- und Nickbewegungen des Kraftfahrzeuges eingestellt werden.

Ferner kann durch die weitere Höhenverstellung des Kugelgelenkes 34 bzw. die damit verbundene Neigungsverstellung des Lenkers 16 gegenüber einer Horizontalen das sich aus den gedachten Verlängerungen der Lenker 12, 14, 16, 18 ergebende Momentanzentrum verstellt und/oder an verschiedene Fahrzeugtypen mit im wesentlichen gleichen Radaufhängungen 10 entsprechend angepasst werden.

Die Erfindung ist nicht auf die beschriebenen Ausführungsbeispiele beschränkt. So können ggf. mehrere Lenker 12, 14, 16, 18 wie vorbeschrieben höheneinstellbar ausgeführt sein. Ferner kann die Höheneinstellung ggf. auch an den inneren Lenkerlagern 12a, 14a, 16a, 18a vorgesehen sein.

## Patentansprüche

1. Radaufhängung für die gelenkten Räder eines Kraftfahrzeuges, mit je Rad zumindest einem oberen Lenker (12, 14) und zwei unteren aufgelösten Lenkern (16, 18), die in jeweils einem definierten Winkel zueinander angeordnet sind und einerseits mit dem Aufbau des Kraftfahrzeuges und andererseits mit einem Radträger (20) gelenkig verbunden sind, sowie mit einem über Spurstangen (28) an einem Lenkhebel des Radträgers (20) angreifenden Lenkgetriebe (26), **dadurch gekennzeichnet, dass** zumindest der untere, vordere und etwa quer zur Fahrzeuglängsmittelachse verlaufende Lenker (16) an zumindest einer seiner Anlenkstellen (34) am Radträger (20) und am Aufbau des Kraftfahrzeuges höhenverstellbar angeordnet ist, und **dass** die am Radträger (20) über ein Kugelgelenk (42) angelenkte Spurstange (28) des Lenkgetriebes (26) im wesentlichen parallel und in der gleichen Lenkerebene der aufgelösten, unteren Lenker (16, 18) der Radaufhängung (10) verläuft, und **dass** das Kugelgelenk (42) ebenfalls höhenverstellbar am Radträger (20) angelenkt ist.

2. Radaufhängung nach Anspruch 1, **dadurch gekennzeichnet, dass** der Lenker (16) über ein Kugelgelenk (34) an dem Radträger (20) angelenkt ist und dass das Kugelgelenk (34) relativ zum Radträger (20) oder zum Lenker (16) höhenverstellbar ist.

3. Radaufhängung nach Anspruch 2, **dadurch gekennzeichnet, dass** das Gehäuse (34a) des Kugelgelenkes (34) im Radträger (20) oder im Lenker (16) positioniert und höhenverstellbar ausgebildet ist.

4. Radaufhängung nach Anspruch 3, **dadurch gekennzeichnet, dass** das Gelenkgehäuse (34a) in eine Gewindebohrung (54; 64) des Radträgers (20) oder Lenkers (16) eingeschraubt ist und dass die Einschraubtiefe durch Distanzscheiben (56) oder eine Kontermutter definiert ist.

5. Radaufhängung nach Anspruch 3, **dadurch gekennzeichnet, dass** das Gelenkgehäuse (34a') in eine Bohrung (58) des Radträgers (20) oder Lenkers (16) eingesteckt und mittels einer Klemmschraube (60) gehalten ist und dass die Einstecktiefe durch Distanzscheiben (56) definiert ist.

6. Radaufhängung nach Anspruch 3, **dadurch gekennzeichnet, dass** das Gelenkgehäuse (34a") in eine abgestufte Gewindebohrung (64) des Radträgers (20) oder Lenkers (16) in einen Gewindeabschnitt (64b) kleineren Durchmessers eingeschraubt ist, wobei eine in den weiteren Gewindeabschnitt (64a) größeren Durchmessers eingeschraubte Stellmutter (66) die Einschraubtiefe des Gehäuses (34a") definiert.

7. Radaufhängung nach einem oder mehreren der vorhergehenden Ansprüche, **dadurch gekennzeichnet, dass** der untere, vordere Lenker (16) durch Anlenkung einer Feder-Dämpfer-Einheit (22, 24) als Traglenker ausgeführt ist.

8. Radaufhängung nach einem der Ansprüche 1 bis 7, **dadurch gekennzeichnet, dass** der Gelenkzapfen (42a) des in die Spurstange (28) integrierten Kugelgelenkes (42) relativ zum Lenkarm (20e) am Radträger (20) höhenverstellbar mit dem Lenkarm (20e) verbunden ist.

## Claims

1. Wheel suspension for the steered wheels of a motor vehicle, each wheel having at least one upper control arm (12, 14) and two lower separated control arms (16, 18), which are respectively disposed at a specific angle relative to one another and on the one hand are linked to the body of the motor vehicle and on the other hand to a wheel carrier (20), as well as having a steering gear (26) acting via track rods (28) on a steering knuckle arm of the wheel carrier (20), **characterized in that** at least the lower, front control arm (16) which runs substantially perpendicular to the longitudinal median axis of the vehicle is mounted at least at one of its points of attachment (34) to the wheel carrier and body of the vehicle in such a way as to be height-adjustable, **and in that** the track rod (28) of the steering gear (26), connected to the wheel carrier (20) via a ball joint (42), extends substantially parallel to and in the same plane as the separated lower control arms (16, 18) of the wheel suspension (10), **and in that** the ball joint (42) is also linked to the wheel carrier (20) in such a way as to be height-adjustable.

2. Wheel suspension according to Claim 1, **characterized in that** the control arm (16) is linked via a ball joint (34) to the wheel carrier (20) **and in that** the ball joint (34) is height-adjustable relative to the wheel carrier (20) or control arm (16).

3. Wheel suspension according to Claim 2, **characterized in that** the housing (34a) of the ball joint (34) is positioned in the wheel carrier (20) or control arm (16) and is designed to be height-adjustable.

4. Wheel suspension according to Claim 3, **characterized in that** the ball-joint housing (34a) is screwed into a threaded hole (54; 64) in the wheel carrier (20) or control arm (16) **and in that** the screw-in depth is defined by spacers (56) or by a lock nut.

5. Wheel suspension according to Claim 3, **characterized in that** the ball-joint housing (34a') is inserted into a hole (58) in the wheel carrier (20) or control arm (16) and is retained by means of a clamping screw (60) and **in that** the screw-in depth is defined by spacers (56).

6. Wheel suspension according to Claim 3, **characterized in that** the ball-joint housing (34a") is screwed into a stepped threaded hole (64) in the wheel carrier (20) or control arm (16) into a threaded portion (64b) of relatively small diameter, in which case an adjusting nut (66) screwed into the adjoining threaded portion (64a) of larger diameter defines the screw-in depth of the housing (34a").

7. Wheel suspension according to one or more of the preceding claims, **characterized in that** the lower, front control arm (16) is formed as a supporting control arm by the attachment of a spring/damper unit (22, 24).

8. Wheel suspension according to one of Claims 1 to 7, **characterized in that** the link pin (42a) of the ball joint (42) integrated in the track rod (28) is connected to the steering arm (20e) so as to be height-adjustable relative to the steering arm (20e) on the wheel carrier (20).

## Revendications

1. Suspension de roue pour les roues articulées d'un véhicule automobile comportant pour chaque roue au moins un bras de liaison supérieur (12, 14) et deux bras de liaison (16, 18) inférieurs libérés, lesquels sont disposés selon respectivement un angle défini les uns par rapport aux autres et sont reliés de manière articulée d'une part à la carrosserie du véhicule automobile et d'autre part à un support de roue (20), comportant également un mécanisme de direction (26) venant en prise avec un levier de commande de roue du support de roue (20) via des barres d'accouplement (28), **caractérisée en ce qu'**au moins le bras de liaison (16) inférieur, avant et s'étendant à peu près de manière transversale par rapport à l'axe médian longitudinal du véhicule est disposé de manière réglable en hauteur au niveau au moins d'un de ses emplacements d'articulation (34) sur le support de roue (20) et au niveau de la carrosserie du véhicule automobile, et **en ce que** la barre d'accouplement (28) du mécanisme de direction (26) articulée au niveau du support de roue (20) via une articulation à rotule (42) s'étend essentiellement de manière parallèle et dans le même plan de liaison que le bras de liaison inférieur libéré (16, 18) de la suspension de roue (10), et **en ce que** l'articulation à rotule (42) est également articulée de manière réglable en hauteur au niveau du support de roue (20).

2. Suspension de roue selon la revendication 1, **caractérisée en ce que** le bras de liaison (16) est articulé au niveau du support de roue (20) via une articulation à rotule (34), et **en ce que** l'articulation à rotule (34) est réglable en hauteur par rapport au support de roue (20) ou par rapport au bras de liaison (16).

3. Suspension de roue selon la revendication 2, **caractérisée en ce que** le boîtier (34a) de l'articulation à rotule (34) est positionné dans le support de roue (20) ou dans le bras de liaison (16) et est réalisé de manière réglable en hauteur.

4. Suspension de roue selon la revendication 3, **caractérisée en ce que** le boîtier articulé (34a) est vissé dans un alésage taraudé (54 ; 64) du support de roue (20) ou du bras de liaison (16), et **en ce que** la profondeur de vissage est définie par des rondelles d'écartement (56) ou par un contre-écrou.

5. Suspension de roue selon la revendication 3, **caractérisée en ce que** le boîtier articulé (34a') est inséré dans un alésage (58) du support de roue (20) ou du bras de liaison (16) et est maintenu au moyen d'une vis de serrage (60), et **en ce que** la profondeur d'insertion est définie par des rondelles d'écartement (56).

6. Suspension de roue selon la revendication 3, **caractérisée en ce** le boîtier articulé (34a") est vissé dans un alésage taraudé étagé (64) du support de roue (20) ou du bras de liaison (16) dans une section taraudée (64 b) de plus petit diamètre, un écrou de réglage (66) vissé dans l'autre section taraudée (64a) de diamètre plus grand définissant la profondeur de vissage du boîtier (34a").

7. Suspension de roue selon l'une ou plusieurs des revendications précédentes, **caractérisée en ce que** le bras de liaison inférieur, avant (16) est réalisé en tant que bras porteur en articulant une unité d'amortissement par ressort (22, 24).

8. Suspension de roue selon l'une des revendications 1 à 7, **caractérisée en ce que** le pivot articulé(42a) de l'articulation à rotule (42) intégrée dans la barre d'accouplement (28) est relié au bras articulé (20e) réglable en hauteur sur le support de roue (20) par rapport au bras articulé (20e).
